# EUROPEAN PATENT APPLICATION

(11) **EP 1 990 077 A1**
(43) Date of publication of application: **12.11.2008**
(21) Application number: 07737394.2
(22) Date of filing: 26.02.2007
(51) Int. Cl.: A63F 13/00, G06F 3/048, G06T 11/80

(54) **OBJECT DISPLAY DEVICE, OBJECT DISTRIBUTION METHOD, INFORMATION RECORDING MEDIUM, AND PROGRAM**

(30) Priority: 28.02.2006 JP 2006051653
(71) Applicant: Konami Digital Entertainment Co., Ltd., Minato-ku Tokyo 107-8324 (JP)
(72) Inventor: MORI, Shoji, Tokyo 107-8324 (JP)
(74) Representative: Rüger, Barthelt & Abel Patentanwälte
(86) International application number: PCT/JP2007/053542
(87) International publication number: WO 2007/099916

(57) **Abstract**

A position information storage unit (220) stores position information regarding a player character and other characters in three-dimensional space. When instruction information for instructing object rearrangement is supplied from an operation unit (230) according to an operation of a player, a control unit (240) selects any of characters located in the vicinity of the player character and rearranges the selected individual characters or the like appropriately. More specifically, a selection unit (241) determines a selection area around a position of the player character as the center and selects characters as selected characters, which are located within the selection area. Moreover, a rearrangement unit (242) rearranges the selected individual characters within a rearrangement area so as not to overlap any of therebetween. Further, an image creation unit (250) creates image data, based on a position information or the like regarding any of the characters rearranged by the rearrangement unit (242).

## Description

### Technical Field

The present invention relates to an object display device, an object arrangement method, an information recording medium and a program suitable for improving a visibility of a predetermined object in a plurality of displayed objects.

### Background Art

In recent years, a network game using a network such as the Internet or the like has become popular. Generally, there is provided a virtual "lobby" in a network game for finding a playing partner or an opponent player (or for an information exchange, or the like). More specifically, there is arranged a lobby server on the network, and then it becomes available to find the playing partner, the opponent player, or the like, by connecting individual game terminals to the lobby server, and by performing a chat communication with other players (an exchange of message), or the like.

And recently, there is known a lobby server that is called a visual lobby, wherein each player character is to be displayed in response to login of individual players, and then it is possible to perform a chat communication or the like between the individual player characters.
Moreover, a chat system related technique has been disclosed, for displaying on such as a communication device or the like with changing a font size of a message in response to a strength of a send operation (for example, refer to the patent literature 1).
Patent Literature 1: Unexamined Japanese Patent Application KOKAI Publication No. 2004-126786 (pages 8 to 17; FIG. 9)

### Disclosure of Invention

### Problem to be Solved by the Invention

In the above mentioned visual lobby, when the number of displayed characters is large, the characters may, in some cases, be overlapped with each other and cause difficulty in visibility. In general, a player performs a chat communication or the like by moving the player character of oneself closer to a desired character (such as another player character or the like). However, the character overlap may cause impossibility to find the desired characters, or cause difficulty to designate a character as an object for the chat communication even if it is found out.

Therefore, a technique has been required for being possible to improve a visibility of a predetermined object in a status where a plurality of characters (objects) are displayed.

The present invention has been made to overcome such problems, and it is an object of the present invention to provide an object display device, an object arrangement method, an information recording medium and a program that can improve a visibility of a predetermined object in a plurality of displayed objects.

### Means for Solving the Problem

An object display device according to a first aspect of the present invention is an object display device that arranges and displays a plurality of objects in a display area on a screen, based on each position information respectively thereof, which are configured as comprising a selection unit and a rearrangement unit.

First, the selection unit selects individual objects located within a predetermined selection area, based on any position arbitrary assigned in the display area. Next, the rearrangement unit rearranges the selected individual objects for having a predetermined positional relationship within a rearrangement area larger than the selection area. That is, the rearrangement unit rearranges the selected individual objects within the rearrangement area by moving, by rotating, by reducing, or the like for example, so as not to overlap any of therebetween (or with overlapping just a part thereof). Thus, it becomes possible to arrange the individual objects with ease in visuality in the vicinity of the assigned position.
As a result, it becomes possible to improve a visibility of a predetermined object in a plurality of displayed objects.

An object display device according to a second aspect of the present invention is an object display device that arranges and displays a plurality of objects including a player object to be an operational object in a display area on a screen, based on each position information respectively thereof, which are configured as comprising an instruction unit, a selection unit and a rearrangement unit.
First, the instruction unit instructs a movement of the player object in a display area according to an operation of the player for example. Further, the selection unit selects individual objects located within a predetermined selection area, based on a current position of the player object. And then the rearrangement unit rearranges the selected individual objects for having a predetermined positional relationship based on the player object within a rearrangement area larger than the selection area. That is, the rearrangement unit rearranges the selected individual objects within the rearrangement area by moving, by rotating, by reducing, or the like for example, so as not to overlap any of therebetween (or with overlapping just a part thereof). Thus, it becomes possible to arrange the individual objects with ease in visuality in the vicinity of an assigned position therefor.
As a result, it becomes possible to improve a visibility of a predetermined object in a plurality of displayed objects.

The rearrangement unit may move some or whole of objects from among the selected individual objects, and may rearrange the individual objects within the rearrangement area so as not to overlap any of therebetween.

The rearrangement unit may change at least one of display modes including an orientation, a size and a simplification of some or whole of objects from among the selected individual objects, and may rearrange the individual objects within the rearrangement area so as not to overlap any of therebetween.

The rearrangement unit may further move objects located within the rearrangement area from among the objects not selected by the selection unit to outside the rearrangement area.

The rearrangement unit may change a display color of the selected objects and/or a display color of at least one of objects located within the rearrangement area from among the objects not selected by the selection unit, and may highlight the selected objects.

An object arrangement method according to a third aspect of the present invention is the object arrangement method for a display device that arranges and displays a plurality of objects in a display area on a screen, based on each position information respectively thereof, which is configured as comprising a selection step and a rearrangement step.

First, in the selection step, the selection unit selects individual objects located within a predetermined selection area, based on any position arbitrary assigned in the display area. Next, in the rearrangement step, the selected individual objects are rearranged so that they have a predetermined positional relationship within a rearrangement area larger than the selection area. That is, the selected individual objects are rearranged within the rearrangement area by moving, by rotating, by reducing, or the like for example, so as not to overlap any of therebetween (or with overlapping just a part thereof). Thus, it becomes possible to arrange the individual objects with ease in visuality in the vicinity of an assigned position therefor.
As a result, it becomes possible to improve a visibility of a predetermined object in a plurality of displayed objects.

A program according to a fourth aspect of the present invention is configured to control a computer (including an electronic device) to function as the above-described object display device.

The program of the present invention can be recorded on a computer readable information recording medium, such as a compact disk, a flexible disk, a hard disk, a magneto-optical disk, a digital video disk, a magnetic tape, a semiconductor memory, or the like.

The program can be distributed and sold, independently of a computer which executes the program, over a computer communication network. The information recording medium can be distributed and sold, independently of the computer.

### Effect of the Invention

According to the present invention, it is possible to improve a visibility of a predetermined object in a plurality of displayed objects.

### Brief Description of Drawings

[FIG. 1] An exemplary diagram illustrating the schematic configuration of a game device according to the embodiment of the present invention.
[FIG. 2] An exemplary diagram illustrating the schematic configuration of an object display device according to the embodiment of the present invention.
[FIG. 3A] An explanatory diagram illustrating the rearrangement of characters (objects).
[FIG. 3B] An explanatory diagram illustrating the rearrangement of characters.
[FIG. 3C] An explanatory diagram illustrating the rearrangement of characters.
[FIG. 3D] An explanatory diagram illustrating the rearrangement of characters.
[FIG. 3E] An explanatory diagram illustrating the rearrangement of characters.
[FIG. 3F] An explanatory diagram illustrating the rearrangement of characters.
[FIG. 4A] An exemplary diagram showing one example of image data created in an image creation unit.
[FIG. 4B] An exemplary diagram showing one example of image data created in an image creation unit.
[FIG. 5] A flowchart showing one example of the object arrangement process according to the embodiment of the present invention.
[FIG. 6A] An exemplary diagram showing one example of image data created in an image creation unit in response to a movement of a player character or the like.
[FIG. 6B] An exemplary diagram showing one example of image data created in an image creation unit in response to a movement of a player character or the like.
[FIG. 7A] An explanatory diagram illustrating the rearrangement of characters (objects) according to another embodiment.
[FIG. 7B] An explanatory diagram illustrating the rearrangement of characters according to another embodiment.
[FIG. 7C] An explanatory diagram illustrating the rearrangement of characters according to another embodiment.
[FIG. 7D] An explanatory diagram illustrating the rearrangement of characters according to another embodiment.
[FIG. 7E] An explanatory diagram illustrating the rearrangement of characters according to another embodiment.
[FIG. 7F] An explanatory diagram illustrating the rearrangement of characters according to another embodiment.
[FIG. 8A] An explanatory diagram illustrating the highlighting of characters (objects) according to another embodiment.
[FIG. 8B] An explanatory diagram illustrating the highlighting of characters according to another embodiment.

### Description of Reference Numerals

- 100: game device
- 101: CPU
- 102: ROM
- 103: RAM
- 104: interface
- 105: controller
- 106: external memory
- 107: DVD-ROM drive
- 108: image processor
- 109: sound processor
- 110: NIC
- 200: object display device
- 210: object storage unit
- 220: position information storage unit
- 230: operation unit
- 240: control unit
- 241: selection unit
- 242: rearrangement unit
- 250: image creation unit
- 260: image display unit

### Best Mode for Carrying Out the Invention

An embodiment of the present invention will be described below. While the following describes an embodiment in which the present invention is adapted to a game device for the ease of understanding, however, the present invention can be also adapted to an information processing device, such as various kinds of computers, a PDA, portable telephone, or the like. That is, the embodiment to be described below is given by way of illustration only, and does not limit the scope of the invention. Therefore, those skilled in the art can employ embodiments in which each of the elements is, or all of the elements are, replaced with equivalent ones, and which are also encompassed in the scope of the invention.

### (First Embodiment)

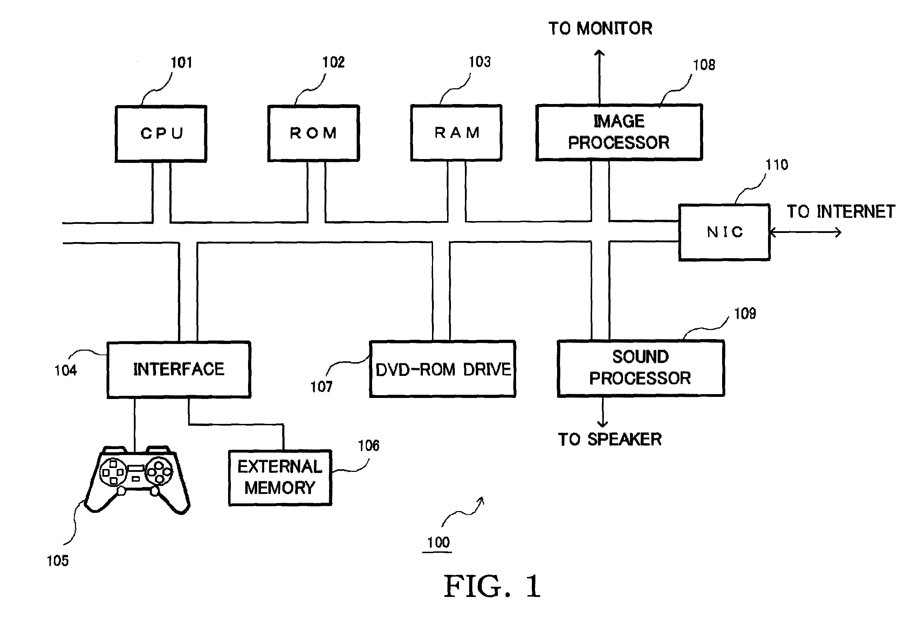

FIG. 1 is an exemplary diagram illustrating the schematic configuration of a typical game device for realizing an object display device according to the embodiment of the present invention. A description will be given hereinbelow referring to the present diagram.

A game device 100 comprises a CPU (Central Processing Unit) 101, a ROM (Read Only Memory) 102, a RAM (Random Access Memory) 103, an interface 104, a controller 105, an external memory 106, a DVD (Digital Versatile Disc)-ROM drive 107, an image processor 108, a sound processor 109 and an NIC (Network Interface Card) 110.

And then as a DVD-ROM storing a program and data for a game is loaded into the DVD-ROM drive 107 and the game device 100 is powered on, the program is executed to realize the object display device of the present embodiment.

The CPU 101 controls the general operation of the game device 100, and is connected to individual components to exchange such as a control signal or data therewith.

An IPL (Initial Program Loader) which is executed immediately after power-on is recorded in the ROM 102. As the IPL is executed, the program recorded in the DVD-ROM is read into the RAM 103 and is executed by the CPU 101. Further, the RAM 102 stores a program and various data for an operating system necessary for controlling the overall operation of the game device 100.

The RAM 103 is for temporarily storing data and/or programs, and retains the program and/or data read from the DVD-ROM, and other data needed for such as progressing a game or chat communication.

The controller 105 connected via the interface 104 receives an operation input which is made when a user plays a game. For example, the controller 105 receives the input, such as a string of characters (message) or the like, according to the operation input.

The external memory 106 connected as detachable via the interface 104 stores data as rewritable, such as indicating the progress status of the game, data of chat communication logs (records), or the like. As the user makes an instruction input via the controller 105, these data can adequately be recorded in the external memory 106.

A program for realizing a game, an image data and/or a sound data accompanying the game are recorded in the DVD-ROM to be loaded into the DVD-ROM drive 107. Under the control of the CPU 101, the DVD-ROM drive 107 performs a process of reading from the DVD-ROM loaded therein, for reading a necessary program and/or data, and then these are temporarily stored in the RAM 103 or the like.

The image processor 108 processes data read from the DVD-ROM by using the CPU 101 and/or an image operation processor (not shown) provided in the image processor 108, and then records the data in a frame memory (not shown) provided in the image processor 108. An image information recorded in the frame memory is converted to a video signal at a predetermined synchronous timing, which is in turn output to a monitor (not shown) connected to the image processor 108. Thus, image displays of various types become possible thereby.

Moreover, the image operation processor can perform high-speed execution for an overlay operation of a two-dimensional image, for a transparent operation such as an α blending or the like, and for various kinds of saturate operations.
Further, it is also possible to perform high-speed execution of an operation to acquire a rendered image with an overview of a polygon arranged in virtual three-dimensional space from a predetermined view point position, by rendering using a Z buffer scheme for polygon information which is arranged in the virtual three-dimensional space and to which various kinds of texture information are added.

Furthermore, the CPU 101 and the image operation processor cooperate to be able to write a string of characters as a two-dimensional image in the frame memory or on each polygon surface, according to font information which defines shapes of the characters. Here, such the font information is recorded in the ROM 102, however, font information for exclusive use may also available, that are recorded in the DVD-ROM.

The sound processor 109 converts sound data read from the DVD-ROM to an analog sound signal, and then outputs the sound signal from a speaker (not shown) connected thereto. Moreover, it generates sound effects and music data which are required to be generated at the period of progressing a game, and then outputs sounds corresponding thereto, from the speaker under the control of the CPU 101.

The NIC 110 serves to connect the game device 100 to a computer communication network (not shown), such as the Internet or the like. Such the NIC 110 is pursuant to the 10 BASE-T/100 BASE-T standard which is to be used at the time of constructing a LAN (Local Area Network), or it is comprised of such as an analog modem for connecting to the Internet using a telephone circuit, an ISDN (Integrated Services Digital Network) modem, an ADSL (Asymmetric Digital Subscriber Line) modem, a cable model for connecting to the Internet using a cable television circuit, or the like, and of an interface (not shown) which intervenes between the CPU 101 and any one of such the modems.

In addition, the game device 100 may be configured to achieve the same functions as the ROM 102, the RAM 103, the external memory 106, the DVD-ROM which is to be loaded into the DVD-ROM drive 107, or the like, by using a large-capacity external storage device, such as a hard disk.
Moreover, a mode may also be employed where such as a keyboard for receiving an edit input of a string of characters from a user, a mouse for receiving an assignment and a selection input regarding various kinds of positions therefrom, or the like, is to be connected thereto.

Further, it may be also possible to use a general computer (such as a general-purpose personal computer or the like) for the object display device in place of the game device 100 of the present embodiment. For example, the general computer comprises a CPU, a RAM, a ROM, a DVD-ROM drive and an NIC, similar to the game device 100. Moreover, it comprises an image processor including simplified functions comparing to that of the game device 100, and a hard disk as an external storage device. Further, it is to be provided as being possible to use such as a flexible disk, a magneto-optical disk, a magnetic tape, or the like. Furthermore, it uses such as a keyboard, a mouse, or the like, for an input device, in place of the controller. And then it functions as the object display device when a game program is installed and such the program is executed therein.

### (Schematic Configuration of the Object Display Device)

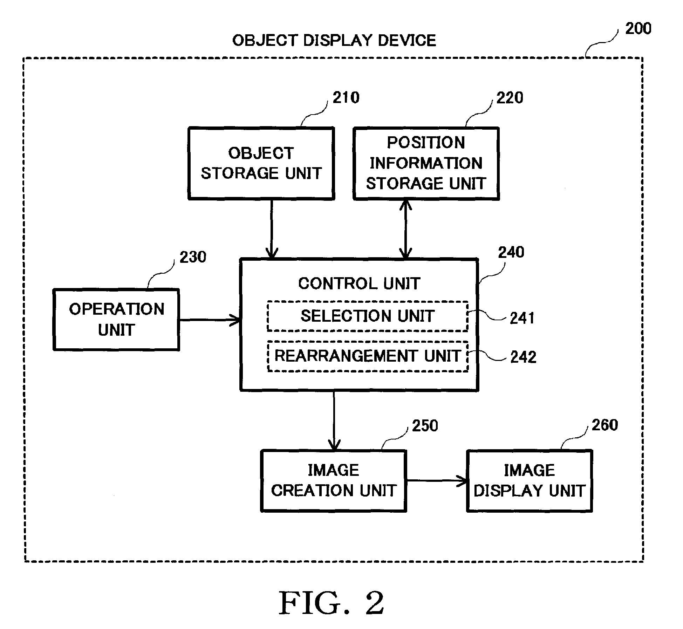

FIG. 2 is an exemplary diagram illustrating the schematic configuration of an object display device according to the present embodiment. Such the objection display device is a device to display a plurality of objects including a player character operated by a player as one example. Moreover, it enables the player character to perform such as a chat or the like with any of other characters located in the vicinity thereof. A description will be given hereinbelow referring to the present diagram.

An object display device 200 comprises an object storage unit 210, a position information storage unit 220, an operation unit 230, a control unit 240, an image creation unit 250 and an image display unit 260.

First, the object storage unit 210 stores information regarding a variety of objects to be a display object.
For example, the object storage unit 210 stores information (such as a character image, a name to be set, or the like), regarding objects, such as the player character to be operated by the player, and the other characters.
Here, the RAM 103 may function as such the object storage unit 210.

The position information storage unit 220 stores position information regarding individual objects. For example, the position information storage unit 220 stores the position information of the individual objects (the player character and the other characters) in three-dimensional space.
Here, the RAM 103 may function as such the position information storage unit 220.

The operation unit 230 receives a predetermined instruction information according to an operation of the player. For example, the operation unit 230 receives such as an instruction information for instructing a rearrangement of any of the other characters located in the vicinity of the player character, an instruction information for instructing free movement of the player character, or the like.
Here, the controller 105 may function as such the operation unit 230.

The control unit 240 controls the overall operation of the object display device 200.
For example, the control unit 240 supplies the position information regarding the individual objects stored in the position information storage unit 220 to the image creation unit 250 without changing any thereof. And then the control unit 240 controls the image creation unit 250 to create an image data based on each position information of a plurality of the characters respectively.
Moreover, the control unit 240 selects any of the characters located in the vicinity of the player character and rearranges the selected individual characters or the like appropriately, when the instruction information (rearrangement instruction) for instructing an object rearrangement is supplied from the operation unit 230 according to the operation of the player. Further, it may be also possible to rearrange automatically any of the characters located in the vicinity of the player character, instead of such the direct rearrangement instruction therefor. For example, the control unit 240 selects any of the characters located in the vicinity of the player character when an instruction information (movement instruction) for moving the player character is supplied from the operation unit 230, and then it appropriately rearranges such the selected individual characters in the same way.

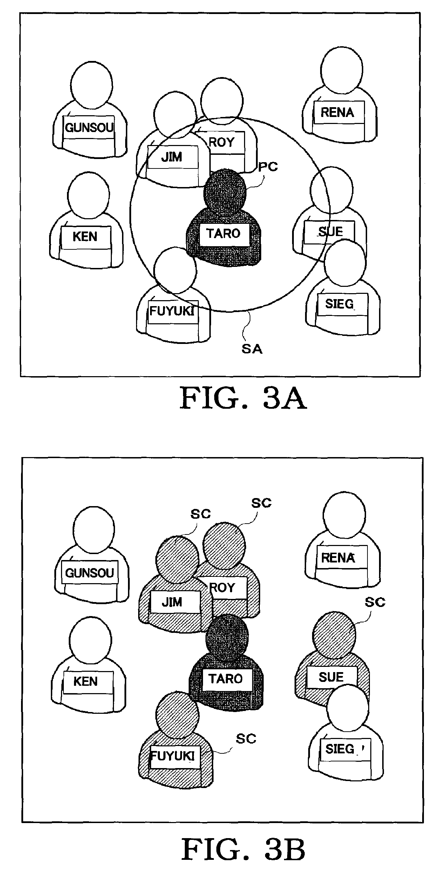

To be more specific, the selection unit 241 selects individual objects located within a predetermined selection area, based on a position of the player character.
Specifically, the selection unit 241 determines a selection area SA around the position of the player character PC as the center, as shown in FIG. 3A. Here, the selection area SA may be fixed, or may be changeable according to a predetermined condition (such as the number of the characters in the vicinity thereof, for example).
Moreover, the selection unit 241 selects characters as selected characters SC as shown in FIG. 3B, which are located within the selection area SA (or overlapped therewith).

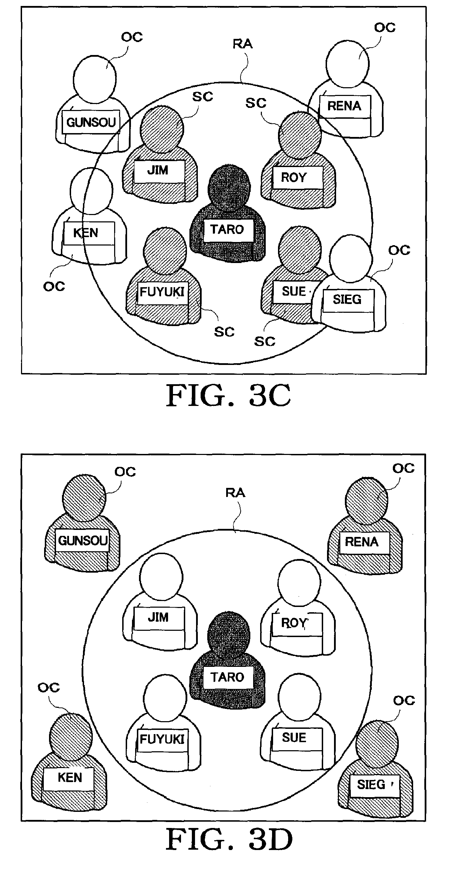

Meanwhile, the rearrangement unit 242 rearranges individual objects selected by the selection unit 241 for having a predetermined positional relationship within a rearrangement area larger than the selection area.
More specifically, the rearrangement unit 242 rearranges the selected individual characters SC within the rearrangement area RA so as not to overlap any of therebetween, as shown in FIG. 3C. In this case, the rearrangement unit 242 moves and rearranges some or whole of the individual characters SC so as not to overlap any of therebetween. Here, such the rearrangement area RA may change appropriately such as a size or the like corresponding to the number of the selected characters SC or the like, for being possible to rearrange the individual characters without overlapping any of therebetween.
Moreover, the rearrangement unit 242 determines presence or absence of any other characters overlapped with the rearrangement area RA, and then moves an overlapped character OC to outside the rearrangement area RA if there is any thereof, as shown in FIG. 3D. Meanwhile, the character OC may be not moved in a case where the character OC is not overlapped with the rearranged character SC, even if the character OC is overlapped with the rearrangement area RA.

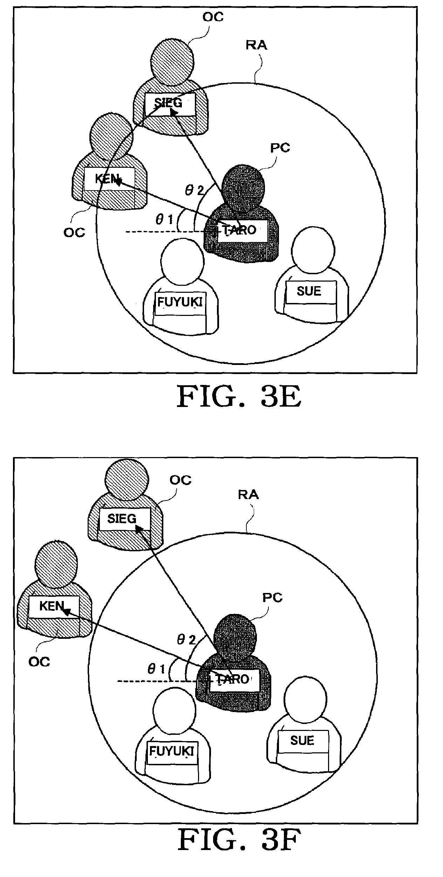

Further, at the time of moving the individual characters OC overlapped with the rearrangement area RA to outside therefrom, the rearrangement unit 242 may move such the characters OC so as not to change much for each positional relationship therebetween. That is, the rearrangement unit 242 rearranges such the characters OC, with considering such as a strength of the relationship (or the strength of the connectedness and the like) that it is possible to be estimated by each position of the individual characters, for retaining such the strength of the relationship therebetween.
For example, in a case where the individual characters OC overlapped with the rearrangement area RA has each angle (azimuth) around the player character PC as the center as shown in FIG. 3E, the rearrangement unit 242 moves the individual characters OC so as not to change such the angles (θ1, θ2), (or within an area where such the angles are not so changed). More specifically, the rearrangement unit 242 moves the individual characters OC to outside the rearrangement area RA with retaining each angle (θ1, θ2) around the player character PC as the center, as shown in FIG. 3F.

Thus, the control unit 240 appropriately rearranges any of the other characters located in the vicinity of the player character so as not to overlap any of therebetween, according to the instruction for the rearrangement. Moreover, the control unit 240 may perform the rearrangement automatically (in real time) in a case where the movement of the player character is instructed, as not limited to a case where the rearrangement of the individual characters OC is directly instructed. That is, the selection unit 241 selects the characters located within the selection area SA every time when the movement operation is performed for the player character at the operation unit 230, and then the rearrangement unit 242 rearranges the selected individual characters within the rearrangement area RA so as not to overlap any of therebetween.
Here, the CPU 101 may function as such the control unit 240.

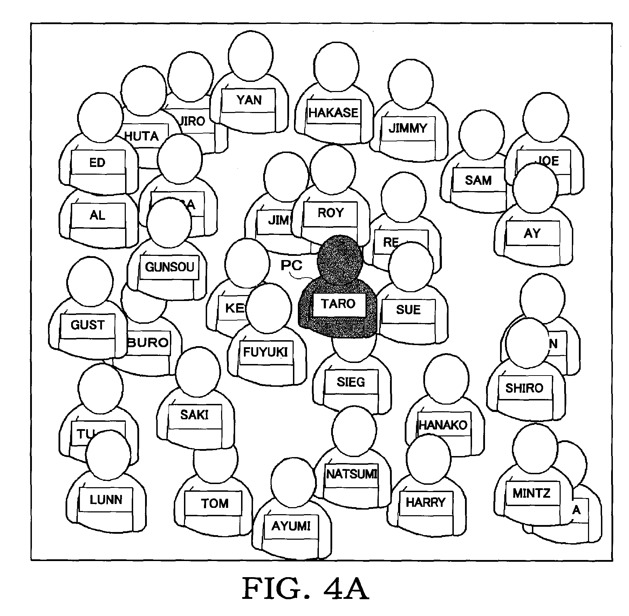

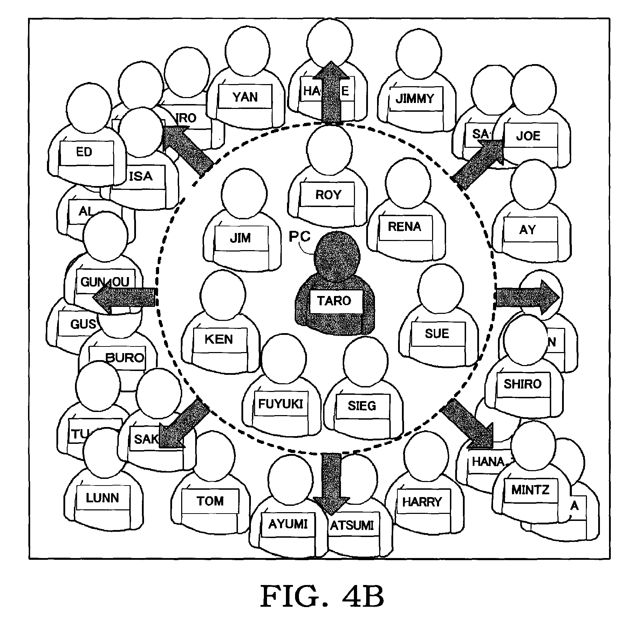

Returning to FIG. 2, the image creation unit 250 is to be controlled by the control unit 240, and then it creates an image data (two-dimensional image) of an object or the like based on a supplied information. For example, it transparent transforms the individual characters in three-dimensional space which are supplied from the control unit 240, it performs such as a hidden surface removal, a texture mapping, or the like, and then it creates the image data for displaying by an operation of rendering.
More specifically, the image creation unit 250 creates the image data as shown in FIG. 4A, in a case where the position information or the like for the individual objects is supplied from the control unit 240 without changing any thereof. Such the image data has a difficulty in visuality due to the overlap in the characters located in the vicinity of the player character PC.
Meanwhile, the image creation unit 250 creates the image data as shown in FIG. 4B, in a case where a rearranged position information or the like is supplied from the control unit 240 regarding some objects (such as the characters located in the vicinity of the player character, or the like). Such the image data has an ease in visuality for the player because of the arrangement so as not to overlap any of the characters located in the vicinity of the player character PC therebetween.
Here, the image processor 108 may function as such the image creation unit 250.

Returning to FIG. 2, the image display unit 260 displays an image according to the image data created by the image creation unit 250. That is, it displays the image, such as shown in FIG. 4A and 4B.
Here, a monitor or the like to be connected to the image processor 108 may function as such the image display unit 260.

### (Overview of Operation of the Object Display Device)

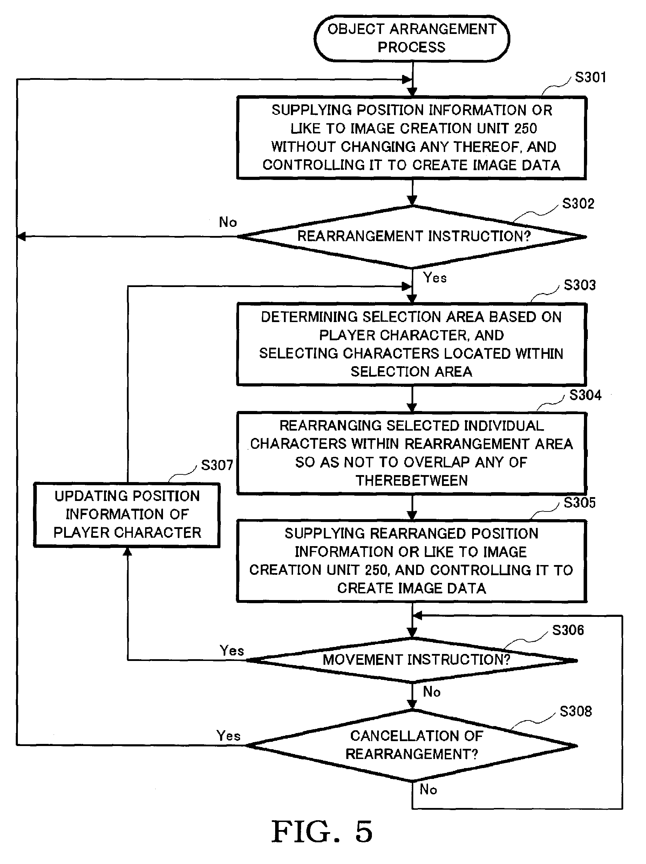

FIG. 5 is a flowchart showing the flow of control of an object arrangement process performed in the object display device 200 of the above mentioned configuration. A description regarding an operation of the object display device 200 will be given hereinbelow referring to the present diagram. Such the object arrangement process is to be started, for example, after storing information regarding an object (individual characters) into the object storage unit 210 and the position information storage unit 220.

First, the control unit 240 supplies position information or the like to the image creation unit 250 without changing any thereof, and then it controls the image creation unit 250 to create an image data (step S301). That is, it supplies the information regarding objects stored in the object storage unit 210 and the position information stored in the position information storage unit 220 to the image creation unit 250, and then it controls the image creation unit 250 to create the image data based on each position information of a plurality of characters respectively.
For example, the image creation unit 250 creates image data as shown in the above mentioned FIG. 4A, according to the position information or the like supplied therefrom.

The control unit 240 determines presence or absence of a rearrangement instruction (step S302). That is, it determines whether or not an instruction information is supplied for instructing a rearrangement regarding any of the other characters located in the vicinity of a player character from the operation unit 230 according to an operation of a player.

If the control unit 240 determines that there is no rearrangement instruction supplied (step S302: No), it returns the process to the above mentioned step S301.
On the contrary, in a case where the control unit 240 determines that there is supplied a rearrangement instruction (step S302: Yes), the operation unit 230 determines a selection area based on a player character, and then it selects the characters located within such the area (step S303).
For example, the selection unit 241 determines the selection area SA around the position of the player character PC as the center, as shown in the above mentioned FIG. 3A, and then it selects the characters as the selected characters SC, which are located within such the selection area SA, as shown in the above mentioned FIG. 3B.

The control unit 240 rearranges the selected individual characters within the rearrangement area RA so as not to overlap any of therebetween (step S304).
For example, the rearrangement unit 242 moves some or whole of the selected individual characters SC, and then it rearranges the individual characters SC within the rearrangement area RA so as not to overlap any of therebetween, as shown in the above mentioned FIG. 3C. Moreover, the rearrangement unit 242 moves any other characters OC to outside the rearrangement area RA if there is any overlapped with the rearrangement area RA, as shown in the above mentioned FIG. 3D.

The control unit 240 supplies a rearranged position information or the like to the image creation unit 250 and controls it to create an image data (step S305).
For example, the image creation unit 250 creates image data as shown in the above mentioned FIG. 4B, according to the rearranged position information or the like.

The control unit 240 determines presence or absence of a movement instruction (step S306). That is, it determines whether or not an instruction information is supplied for instructing a movement regarding the player character from the operation unit 230 according to the operation of the player.

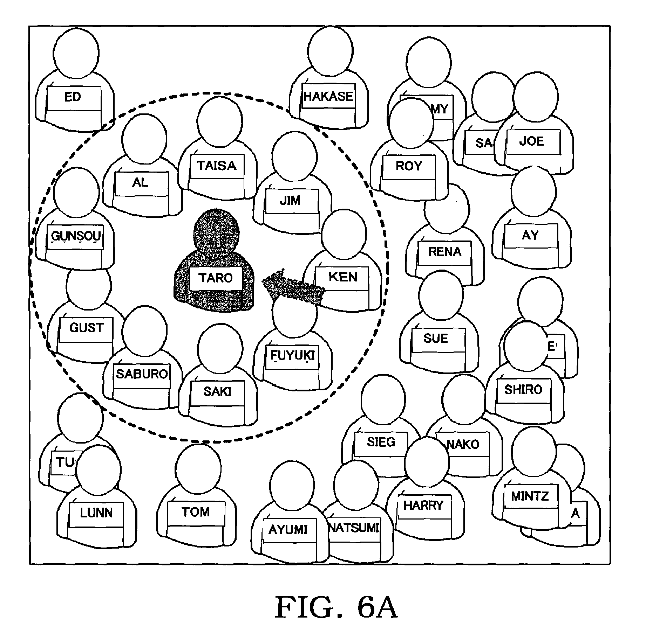

If the control unit 240 determines that there is supplied a movement instruction (step S306: Yes), it updates the position information of the player character (step S307). That is, it updates the position information of the player character in the position information storage unit 220 in response to the movement instruction.
Then, the control unit 240 returns the process to step S303, and then it performs the above mentioned processes of steps S303 to S305. That is, it determines the selection area based on the updated position of the player character, selects the characters located within such the area, and it rearranges the selected individual characters or the like within the rearrangement area larger than the selection area so as not to overlap any of therebetween. Further, it supplies the rearranged position information or the like to the image creation unit 250, and then it controls the image creation unit 250 to create an image data.
For example, the image creation unit 250 creates the image data as shown in FIG. 6A according to the movement of the player character PC, from the above mentioned image data as shown in FIG. 4B. That is, the selection area is also newly defined, and then another character may be selected thereby. Thus, the individual characters are to be rearranged within the rearrangement area.

On the contrary, in a case where the control unit 240 determines that there is no movement instruction supplied (step S306: No), it determines whether or not a cancellation of the rearrangement is instructed (step S308). That is, it determines whether or not an instruction information is supplied for instructing the cancellation of the rearrangement from the operation unit 230 according to the operation of the player.

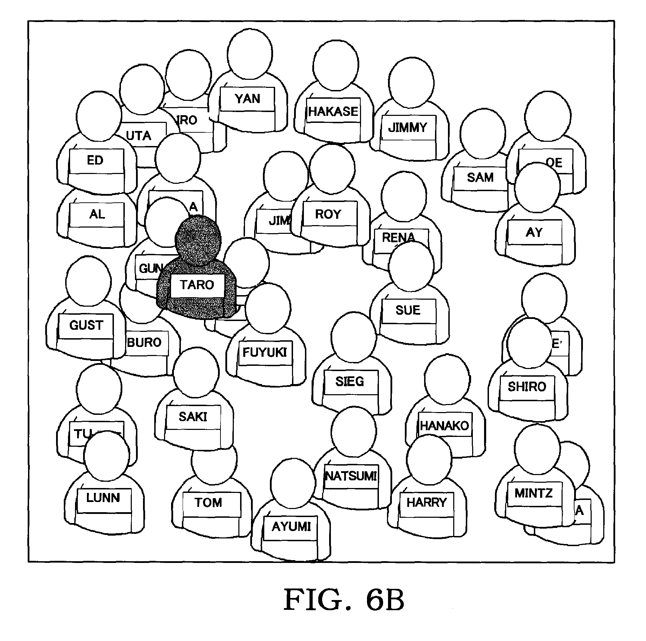

If the control unit 240 determines that there is no instruction for the cancellation of the rearrangement (step S308: No), it returns the process to the above mentioned step S306.
On the contrary, in a case where the control unit 240 determines that there is instructed the cancellation of the rearrangement (step S308: yes), the control unit 240 returns the process to the above mentioned step S301. That is, it supplies the position information or the like stored in the position information storage unit 220 to the image creation unit 250, and then it controls the image creation unit 250 to create an image data based on each position information of a plurality of the characters respectively.
For example, the image creation unit 250 creates image data as shown in the above mentioned FIG. 6B, according to the position information or the like supplied therefrom. That is, the rearrangement regarding any of the characters is cancelled, and then the image of the character followed the position information or the like becomes to be displayed thereby.

Thus, it becomes possible to improve the visibility of a predetermined object from among a plurality of displayed objects by the object arrangement process.

### (Other Embodiments)

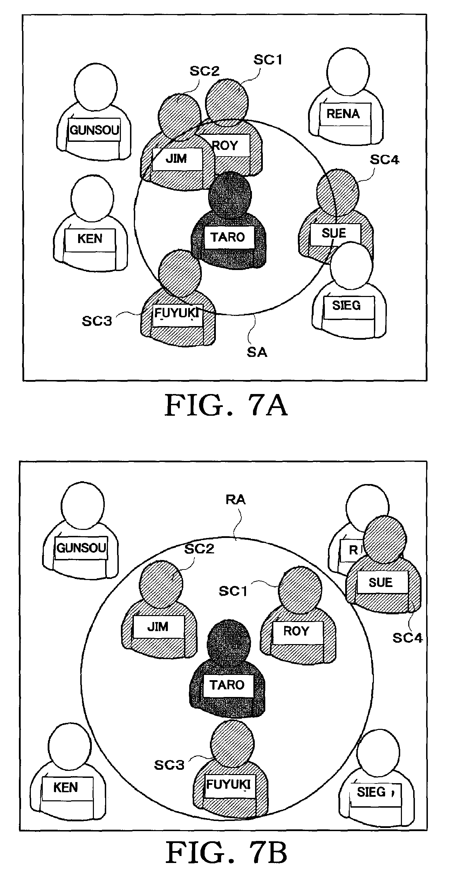

According to the above-described embodiment, the characters located in the vicinity of the player character are objects to be selected, however, any of characters may be selected in conjunction with other conditions.
In a case where only male characters are objects to be selected for example, even if there are located characters SC1 to SC4 in the vicinity of the player character PC as shown in FIG. 7A, the characters SC1 to SC3 except the female character SC4 are to be selected and rearranged within the rearrangement area RA as shown in FIG. 7B.

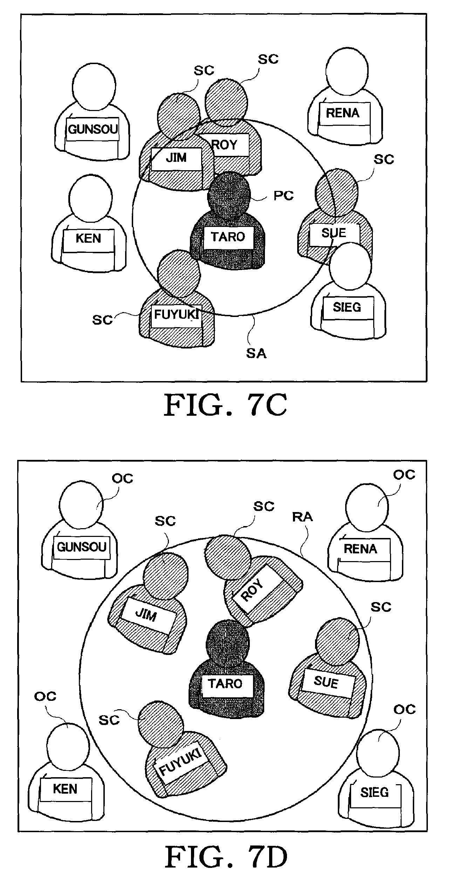

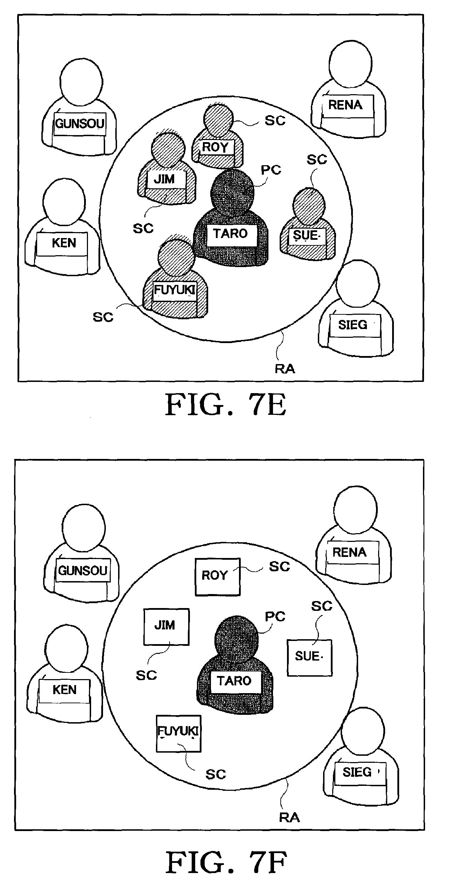

Further, according to the above-described embodiment, there is described the case where some or whole of the selected individual characters are moved, and the individual characters are rearranged within the rearrangement area so as not to overlap any of therebetween, however, the individual characters may be rearranged by changing an orientation or the like for the individual characters.
For example, in a case where the individual characters SC are located in the vicinity of the player character PC as shown in FIG. 7C, some or whole of the individual characters SC are changed in orientation thereof, and the individual characters SC are rearranged within the rearrangement area RA so as not to overlap any of therebetween, as shown in FIG. 7D.
In addition to the above mentioned example, the individual characters SC may be appropriately changed in size or the like so as not to overlap any of therebetween.
For example, it may be possible to reduce some or whole of the individual characters SC and to rearrange the individual characters SC within the rearrangement area RA so as not to overlap any of therebetween, as shown in FIG. 7E. Further, it may be also possible to use icons for displaying any of the individual characters SC as simplified displaying so as not to overlap within the rearrangement area RA, as shown in FIG. 7F.

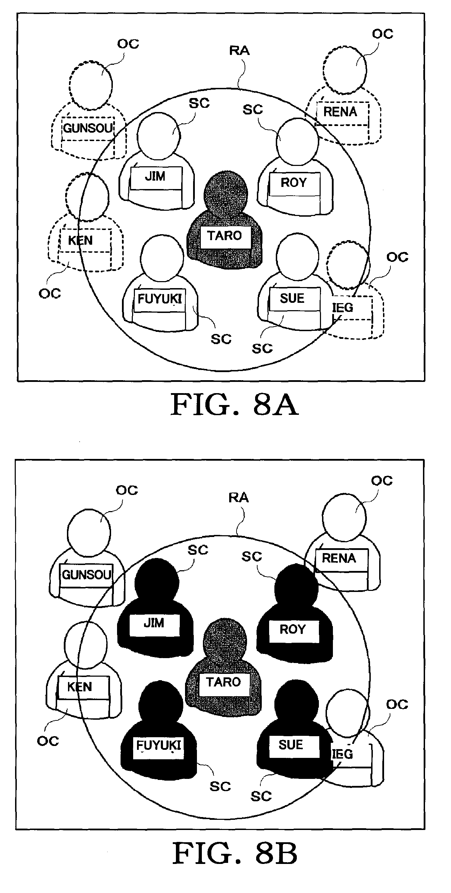

Further, according to the above-described embodiment, there is described the case where the characters OC such as shown in FIG.3C, etc. overlapped with the rearrangement area RA is to be moved to outside the rearrangement area RA as shown in FIG.3D or the like, however, it may be also possible to change a display color or the like for highlighting the selected individual characters SC, instead of moving the characters OC.
For example, it may be available to highlight the individual characters SC, by changing the display color to be translucent for the characters OC overlapped with the rearrangement area RA, as shown in FIG. 8A. Moreover, it may be also possible to highlight the individual characters SC as shown in FIG. 8B, by changing the display color to be a predetermined display color (such as red or the like) with retaining the display color for the individual characters OC. Further, it may be also possible to highlight the individual characters SC relatively, by changing the display colors for both of the individual characters OC and the individual characters SC respectively.

According to the above-described embodiment, there is described the case where the player character or the like is to be displayed as one example of the objects, however, an object as the display object is not limited to such the characters or the like but arbitrary.
For example, it is also applicable appropriately to a case where an object of an icon, a symbol, or the like, is to be displayed.

The present invention claims the priority based on Japanese Patent Application No. 2006-051653 the entire contents of which are incorporated herein by reference.

### Industrial Applicability

As described above, the present invention can provide an object display device, an object arrangement method, an information recording medium and a program suitable for improving a visibility of a predetermined object in a plurality of displayed objects.

## Claims

1. An object display device that arranges and displays a plurality of objects in a display area on a screen, based on each position information respectively thereof, said object display device comprising:
a selection unit (241) that selects individual objects located within a predetermined selection area, based on any position assigned arbitrarily in said display area; and
a rearrangement unit (242) that rearranges the selected individual objects for having a predetermined positional relationship within a rearrangement area larger than the selection area.

2. An object display device that arranges and displays a plurality of objects including a player object to be an operational object in a display area on a screen, based on each position information respectively thereof, said object display device comprising:
an instruction unit (230) that instructs a movement of the player object in the display area;
a selection unit (241) that selects individual objects located within a predetermined selection area, based on a current position of the player object; and
a rearrangement unit (242) that rearranges the selected individual objects for having a predetermined positional relationship based on the player object within a rearrangement area larger than the selection area.

3. The object display device according to claim 1, wherein
said rearrangement unit (242) moves some or whole of objects from among the selected individual objects, and rearranges the objects within the rearrangement area so as not to overlap any of therebetween.

4. The object display device according to claim 1, wherein
said rearrangement unit (242) changes at least one of display modes including an orientation, a size and a simplification of some or whole of objects from among the selected individual objects, and rearranges the individual objects within the rearrangement area so as not to overlap any of therebetween.

5. The object display device according to claim 1, wherein
said rearrangement unit (242) further moves objects located within the rearrangement area from among the objects not selected by said selection unit to outside the rearrangement area.

6. The object display device according to claim 1, wherein
said rearrangement unit (242) changes a display color of the selected objects and/or a display color of at least one of objects located within the rearrangement area from among the objects not selected by said selection unit, and highlights the selected objects.

7. An object arrangement method for a display device that arranges and displays a plurality of objects in a display area on a screen based on each position information respectively thereof, said object arrangement method comprising:
a selection step (S303) of selecting individual objects located within a predetermined selection area, based on any position assigned arbitrarily in the display area; and
a rearrangement step (S304) of rearranging the selected individual objects for having a predetermined positional relationship within a rearrangement area larger than the selection area.

8. An information recording medium storing a program for controlling a computer that arranges and displays a plurality of objects in a display area on a screen based on each position information respectively thereof, wherein said program controls said computer to function as:
a selection unit (241) that selects individual objects located within a predetermined selection area, based on any position assigned arbitrarily in the display area; and
a rearrangement unit (242) that rearranges the selected individual objects for having a predetermined positional relationship within a rearrangement area larger than the selection area.

9. A program for controlling a computer that arranges and displays a plurality of objects in a display area on a screen based on each position information respectively thereof, wherein said program controls said computer to function as:
a selection unit (241) that selects individual objects located within a predetermined selection area, based on any position assigned arbitrarily in the display area; and
a rearrangement unit (242) that rearranges the selected individual objects for having a predetermined positional relationship within a rearrangement area larger than the selection area.
